Europäisches Patentamt

European Patent Office

Office européen des brevets

(11) Publication number: **0 415 454 A2**

# EUROPEAN PATENT APPLICATION

(21) Application number: 90116785.8

(22) Date of filing: 31.08.90

(51) Int. Cl.⁵: **G11B 5/008**, G11B 15/02, G11B 5/09

(30) Priority: 31.08.89 JP 226994/89

(43) Date of publication of application:
06.03.91 Bulletin 91/10

(84) Designated Contracting States:
DE GB

(71) Applicant: SHARP KABUSHIKI KAISHA
22-22 Nagaike-cho Abeno-ku
Osaka-shi Osaka 545(JP)

(72) Inventor: Uchiyama, Sadao
364-1, Iida, Hachihonmatsu-cho
Higashihiroshima-shi, Hiroshima-ken(JP)
Inventor: Kodama, Yoshisuke
6-1-107, 2-chome, Nakao, Minami-ku
Fukuoka-shi, Fukuoka-ken(JP)

(74) Representative: TER MEER - MÜLLER -
STEINMEISTER & PARTNER
Mauerkircherstrasse 45
W-8000 München 80(DE)

(54) Magnetic storage apparatus having small diameter.

(57) In a rotary drum system magnetic storage apparatus having a pair of recording heads and a pair of reading heads, a magnetic tape for storing and reading data is wound on the periphery of the rotary drum at an angle of more than 90°. A first recording head, a first reading head or a second recording head, a second recording head or a first reading head and a second reading head are sequentially arranged on the periphery of the rotary drum in a direction of the rotation of the drum. Accordingly, the data reading can be performed immediately after the data is recorded by the first recording head. A time period required from the recording to the reading of the data by the first and second pair of heads can be reduced.

FIG.1

EP 0 415 454 A2

## MAGNETIC STORAGE APPARATUS HAVING SMALL DIAMETER

BACKGROUND OF THE INVENTION

Field of the Invention

The present invention relates generally to magnetic storage apparatus, and more particularly, to a magnetic storage apparatus with a rotary head having a small diameter.

Description of the Background Art

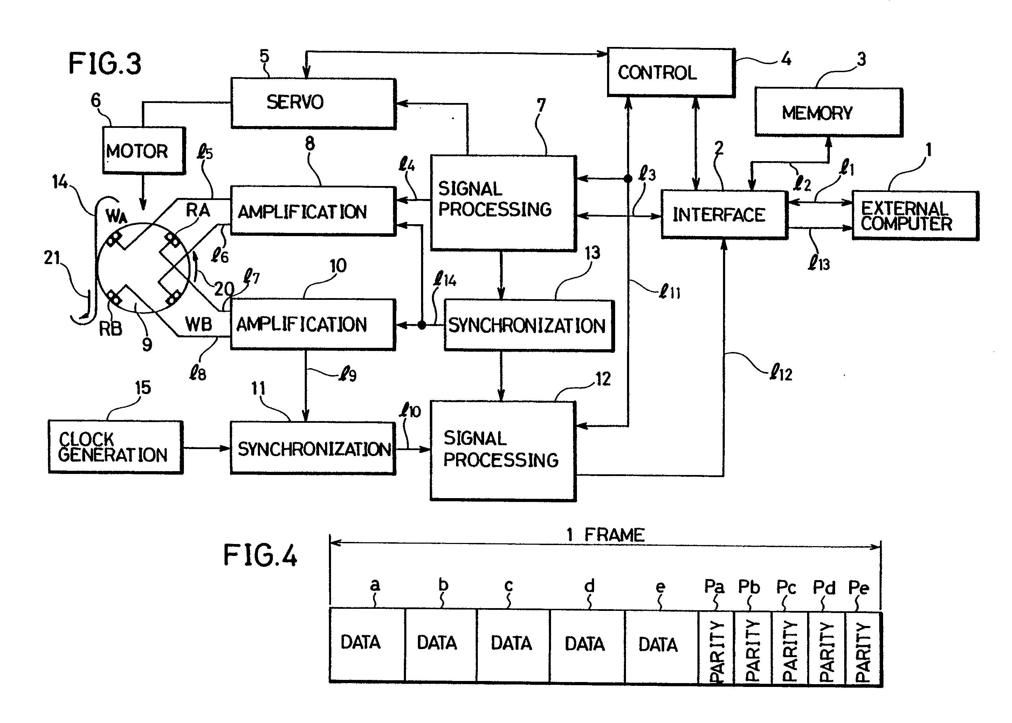

First, the background of the invention will be described. Fig. 3 is a block diagram showing one example of an arrangement of a conventional magnetic storage apparatus. In this magnetic storage apparatus, a rotary head system digital audio tape recorder (referred to as R-DAT, hereinafter) is used as a subsidiary storage apparatus of an external computer 1. In the drawing, when writing data from the external computer 1 on a magnetic tape 14, the data from the external computer 1 is applied to an interface 2 through a line $\ell$1. The data on the line $\ell$1 comprising image information, audio information or operation processing information in the external computer 1 or the like, is transmitted on a basis of two tracks of information units in the magnetic tape 14 as will be described later (this information unit is referred to as a frame, herein after). One frame includes 5120 bytes of data, for example, which is divided on a frame basis in the external computer 1 and outputted.

Fig. 4 is a diagram showing the contents of one frame in the magnetic tape 14. As shown in Fig. 4, one frame of the magnetic tape 14 is divided into a plurality of regions. More specifically, one frame is constituted by individual data regions a-e and parity regions Pa-Pe individually corresponding to the data regions a-e, for example. The above-described data of 5120 bytes is divisionally stored in the data regions a-e each having the data amount of 1024 bytes. The parity regions Pa-Pe each having 128 bytes of data, for example, individually correspond to the data in the data regions a-e. The data in these parity regions Pa-Pe are applied in the interface 2, wherein they are used as error correction codes. As will be described later, the parity is also applied in a signal processing circuit 7 in the R-DAT which, with the arrangement of one frame shown in Fig. 4, allows higher reliability as a subsidiary storage apparatus.

Back to Fig. 3, such data is outputted from the interface 2 to a memory 3 such as a random access memory through a line $\ell$2, as well as to the signal processing circuit 7 through a line $\ell$3.

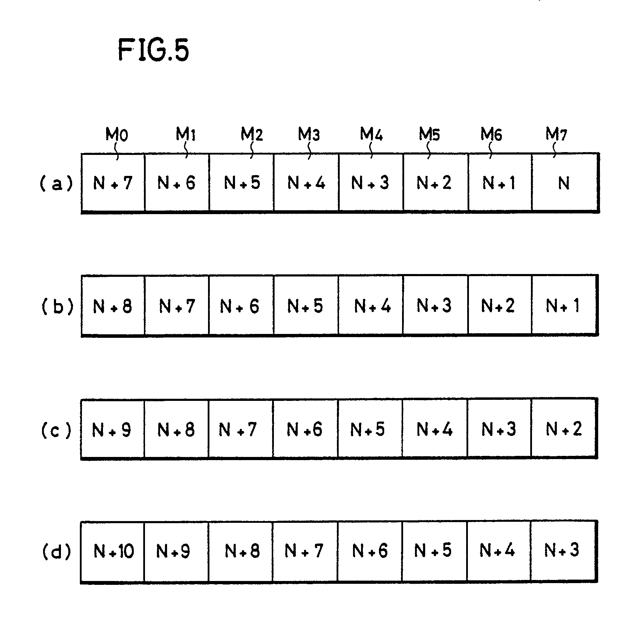

Fig. 5 is a diagram showing storage regions in the memory 3. Referring to Fig. 5, the memory 3 is divided into eight storage regions M0-M7, each storage region storing one frame of data.

In the memory 3, one frame of data from the interface 2 is first stored in the storage region M0. At this time, the data of each of the storage regions M0-M6 in the memory 3 is sequentially transmitted to each storage region of the storage regions M1-M7 on its right side. In addition, the data in the storage region M7 is normally erased. For example, as shown in Fig. 5(a), when the storage regions M0-M7 respectively store data of frame numbers N+7-N as will be described later, if data of frame numbers N+8 and N+9 are sequentially inputted, the memory 3 changes its storage state from that shown in Fig. 5(b) to that shown in Fig. 5-(c). An input operation in the interface 2 and the like are performed in response to a control signal from a control circuit 4 formed by a microcomputer, for example.

Parities are applied, as in an ordinary R-DAT, to the data accepted in the signal processing circuit 7 from the 20 interface 2 through the line $\ell$3. The parities applied data is outputted to an amplifier 8 through a line $\ell$4. Data signals amplified by the amplifier 8 are applied to a writing head WA through a line $\ell$5 and to a writing head WB through a line $\ell$6 by the switching of the amplifier 8, so that they are written on the magnetic tape 14. The switching of the amplifier 8 is controlled by a signal synchronized with rotation of a rotary drum 9 from a synchronizing circuit 13.

Such writing heads WA and WB and reading heads RA and RB which will be described later are fixed to the cylindrical rotary drum 9.

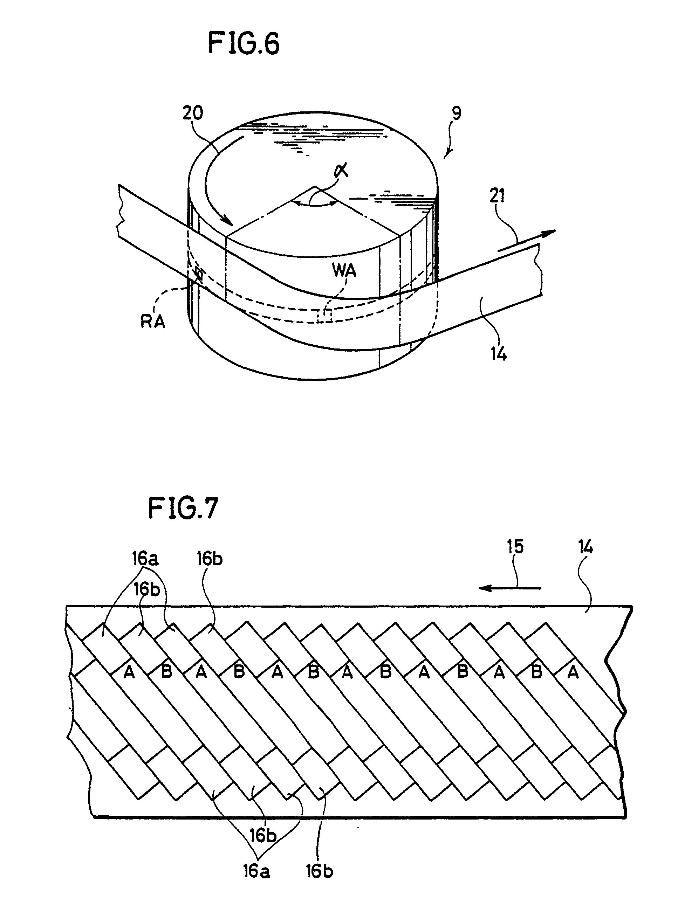

Fig. 6 is a perspective view showing an arrangement near the rotary drum 9. The rotary drum 9 is rotatively driven around an axis of the drum by a motor 6 in the direction indicated by an arrow 20. At this time, the control signal from the control circuit 4 causes a servo circuit 5 to control a rotation speed of the motor 6. In addition, the magnetic tape 14 is driven by a capstern motor (not shown) or the like in the direction indicated by an arrow 21. The magnetic tape 14 contacts a side surface of the rotary drum 9 at an angle of $\alpha$.

The writing heads WA and WB are positioned on a diameter line of the side surface of the rotary drum 9. Similarly, the reading heads RA and RB are also positioned on one diameter line of the side surface of the rotary drum 9.

Fig. 7 is a diagram showing how the writing heads WA and WB travel on the magnetic tape 14.

Referring to Fig. 7, the writing heads WA and WB obliquely scan on the magnetic tape 14 to form tracks A and B, respectively.

The above-described frame numbers are stored in a part of sub code regions 16a and 16b. The data written on the magnetic tape 14 are read by the reading heads RA and RB individually corresponding to the writing heads WA and WB. The signals from the reading heads RA and RB are respectively applied to an amplifier 10 through lines ℓ7 and ℓ8 shown in Fig. 3. At this time, the reading heads RA and RB read the data on the tracks A and B formed by the individually corresponding writing heads WA and WB, respectively.

Back to Fig. 3, the data signals amplified by the amplifier 10 are outputted to a synchronizing circuit 11 through a line ℓ9, in which synchronizing circuit 11 the data signals are synchronized with a clock signal from a clock generating circuit 15. Meanwhile, in response to a synchronization signal from the synchronizing circuit 13, the amplifier 10 switches the outputs of the reading heads RA and RB and outputs the same to the line ℓ9. The output of the synchronizing circuit 11 is sent out to a signal processing circuit 12 through a line ℓ10, wherein data error is corrected. The data correction is carried out based on the parities applied in the signal processing circuit 7. Such a signal processing as error correction of this time is performed by the synchronizing circuit 13 in synchronization with a signal processing such as parity application in the signal processing circuit 7.

The data outputted from the signal processing circuit 12 is applied through a line ℓ12 to the above-described interface 2. Ordinarily, the interface 2 stores data in the memory 3 through the line ℓ2 and thereafter data is read from the memory 3 and outputted to the external computer 1.

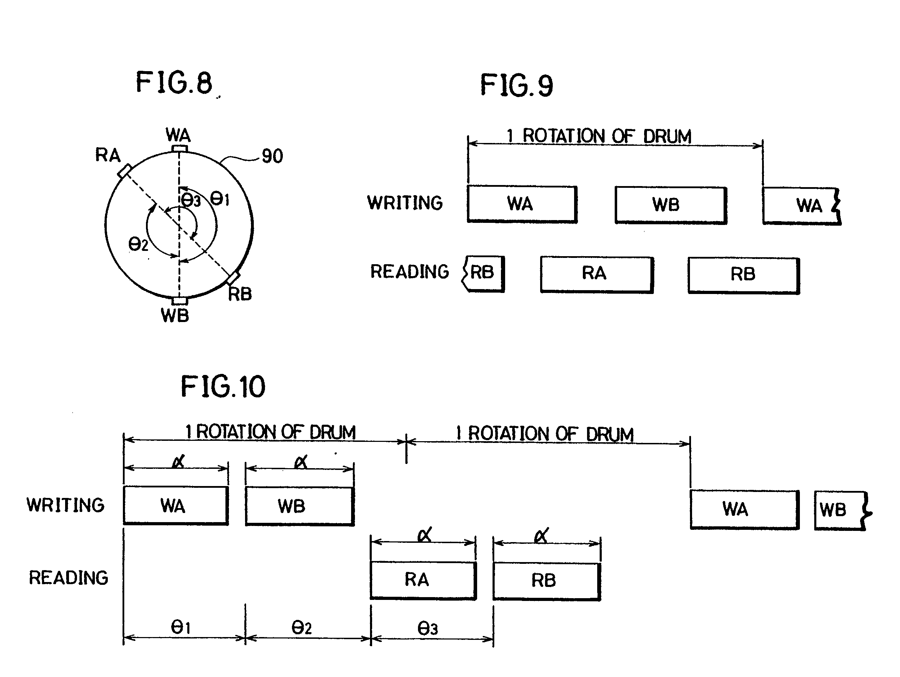

Fig. 8 is a diagram showing an arrangement of a writing head and a reading head for a rotary drum having a small diameter in a conventional R-DAT. A contact angle of a magnetic tape (see Fig. 6) to such a rotary drum 90 having a small diameter is larger than 90°. Assuming that the contact angle of the magnetic tape to an ordinary rotary drum having a diameter of 30mm is 90°, a contact angle $\alpha$ of a magnetic tape to a rotary drum 90 having a diameter of ∅mm as shown in Fig. 8 will be represented as follows.

$\alpha = 90° \times (30/\varnothing)$

In case of $\varnothing = 20$mm, for example, $\alpha$ will be 135°.

Fig. 9 is a diagram explaining a reading operation of the writing head and the reading head of the rotary drum having a small drum diameter shown in Fig. 8. In performing writing and reading at one rotation of the rotary drum 90 by using four heads, if the contact angle of the magnetic tape to the drum 90 becomes 90° or more, a writing period partially overlaps with a reading period, causing cross talk as shown in Fig. 9. Therefore, as shown in Fig. 10, one circle of the writing by the writing heads WA and WB and one circle of the reading by the reading heads RA and RB are conventionally performed during two rotations of the rotary drum 90. Thus, as shown in Fig. 8, each magnetic head is located differently from that of the conventional one shown in Fig. 6.

In the conventional rotary drum having a small diameter, the writing heads and the reading heads are arranged as shown in Fig. 8. More specifically, each magnetic head is arranged such that the following equations are satisfied, wherein a horizontal angle formed by the writing heads WA and WB with respect to the center axis of the rotary drum 90 is represented as $\theta 1$, a horizontal angle formed by the writing head WB and the reading head RB with respect to the center axis of the rotary drum 90 is represented as $\theta 2$ and a horizontal angle 20 formed by the reading heads RA and RB with respect to the center axis of the rotary drum 90 is represented as $\theta 3$. $\alpha \leqq \theta 1$, $\alpha \leqq \theta 2$, $\alpha \leqq \theta 3$,

$\theta 1 + \theta 2 + \theta 3 \leqq 720 - \alpha$

$\theta 1 = \theta 3 = 180°$

In addition, in the conventional example, since an operation to be performed in one rotation of the rotary drum is performed in two rotations thereof, if a lead angle of the magnetic tape with respect to the rotary drum is not changed, a track angle on the magnetic tape is slightly changed. Therefore, it is preferable to attach a magnetic tape with the lead angle changed so as to scan the track at a conventional track angle.

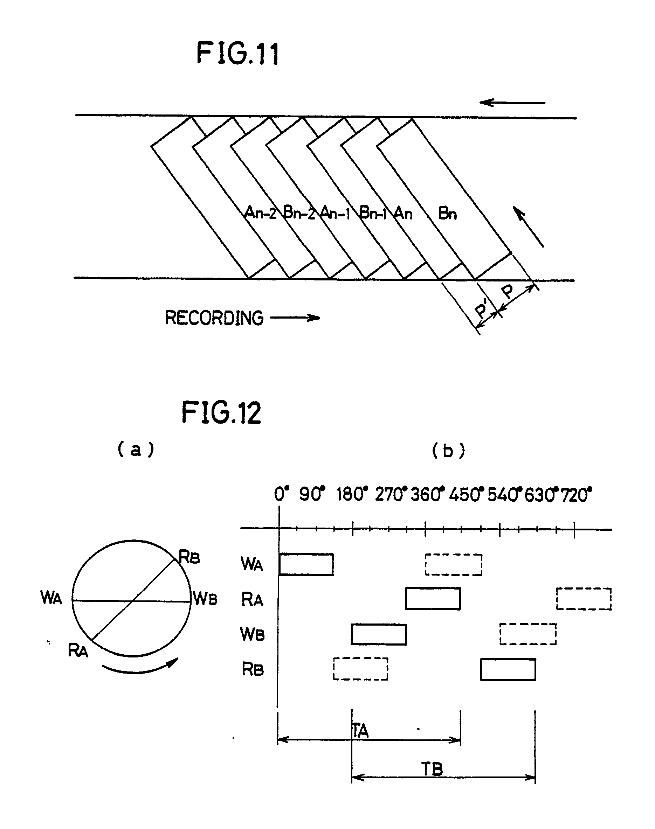

Fig. 11 is a diagram showing how the data is stored on the magnetic tape. Referring to Fig. 11, when the data is recorded on a recording track on an actual tape in the R-DAT, the subsequent data is stored partially overlapping with and on the previous data. Namely, overwriting is performed, so that a track width in reading becomes P′ - (=13.591μm) shown in Fig. 11. A reading track width of an non-overwritten portion becomes P- (=20.4μm) in Fig. 11. Furthermore, as shown in Fig. 11, the recording tracks are sequentially recorded in the order of An-1, Bn-1, An, Bn.

In the conventional rotary drum shown in Fig. 8, when the recording tracks are recorded up to An and Bn by the writing heads WA and WB, respectively, the recording tracks then should be read by the reading heads RA and RB. However, at this time, when the track An and the track Bn are read by the reading heads RA and RB, respectively, the track Bn is not yet overwritten, so that the track width is large, resulting in a different reading track pattern from that actually used. Namely, the output becomes large. Accordingly in this case, An-1 and Bn-1 should be read by the reading heads RA and RB, respectively. However, in such a magnetic storage apparatus, the data recorded by the recording head needs to be read as fast as possible. Namely, an error rate is detected by checking the above-described parities and when the error rate is bad, a quick response is required to correct the same.

Fig. 12 is a diagram showing a head arrangement on a conventional rotary drum and a timing for recording and reading at that time, which timing chart is a revision of the above-described Fig. 10. Fig. 12(a) shows the head arrangement and corresponds to the above-described Fig. 8. The rotary drum is rotated in a direction indicated by an arrow in the drawing. Referring to Fig. 12(a), the reading head RA for reading the recorded data of the recording head WA is positioned to a direction of the rotation' thereof. In this example, it is assumed that the tape is wound around the rotary drum at an angle of 135° for recording and reading to and from the tape.

Fig. 12(b) shows recording and reading timings in this case. Referring to Fig. 12(b), first the recording head WA comes in contact with the tape at an angle of 135° to record the data. Thereafter, the reading head RB comes in contact with the tape, by which no reading is performed and the next recording head RB records the subsequent data. Thereafter, the reading head RA reads the data recorded by the recording head WA and the reading head RB reads the data recorded by the recording head WB. As shown in Fig. 12(b) it is necessary for the rotary drum to be rotated at an angle of 450° (corresponding to TA and TB in the drawing) before the data is written by the recording head WA and the data is read by the reading head RA. This is also the case with the data recorded by the recording head WB. However, in this case the data recorded by the recording head WA is not read out immediately, so that the recorded data can not be checked rapidly.

SUMMARY OF THE INVENTION

Therefore, an object of the present invention is to rapidly carry out the reading for checking stored data in a magnetic storage apparatus having four heads arranged on a compact rotary drum.

According to another aspect of the present invention, the reading for checking the stored data is rapidly performed in a DAT having four heads arranged on a compact rotary drum.

According to a further aspect of the present invention, the reading for checking the storage data can be rapidly performed in a magnetic storage apparatus having four heads arranged on a compact rotary drum for use as a subsidiary storage apparatus of an external computer.

The above-described objects of the present invention can be achieved by a magnetic storage apparatus having a compact rotary drum head including the following elements. Namely, a magnetic storage apparatus according to the present invention includes a rotary drum having a pair of recording heads and a pair of reading heads on the periphery thereof and which rotates in a predetermined direction to cause the pair of reading heads to read the data recorded by the pair of recording heads, a magnetic tape for storing and reading the data being wound around the periphery of the rotary drum at an angle of more than 90°, the pair of recording heads and the pair of reading heads including first and second recording heads and reading heads, respectively, each positioned at a symmetrical point with respect to the center of the drum, the data stored by the first and second recording heads being read by the first and second reading heads, respectively, so that when the rotary drum is rotated in a predetermined direction, the first recording and first and second reading heads coming into contact with the tape in the order of the first recording head, the first reading head or the second storing head, the second recording head or the first reading head and the second reading head.

In the magnetic storage apparatus according to the present invention, the recording head and the reading head are specifically positioned on the periphery of the drum as the foregoing. Each head is arranged such that immediately after the data is recorded by the first recording head, the data reading is performed. Accordingly, a time required for recording to reading the data by the heads of the first and second pairs can be shortened. As a result, reading for checking the written data can be rapidly performed in a magnetic storage apparatus using a compact drum.

The magnetic storage apparatus preferably includes a rotary head system digital audio tape recorder. As a result, it is possible to quickly perform the reading for checking the written data in a rotary head system digital audio tape recorder using a compact drum.

More preferably, the magnetic storage apparatus can be used as a subsidiary storage apparatus for a computer. As a result, the reading can be quickly performed for checking the written data in a computer subsidiary storage apparatus.

The foregoing and other objects, features, aspects and advantages of the present invention will become more apparent from the following detailed description of the present invention when taken in conjunction with the accompanying drawings.

Brief Description of the Drawings

Figs. 1 is a diagram showing an arrangement of the respective magnetic heads on a rotary drum applied to a magnetic storage apparatus according to the present invention.

Fig. 2 is a diagram showing a modified embodiment of Fig. 1.

Fig. 3 is a block diagram of a magnetic storage apparatus explaining the background of the present invention.

Fig. 4 is a diagram showing the contents of one frame in a magnetic tape.

Fig. 5 is a diagram showing storage regions in the memory shown in Fig. 3.

Figs. 6 is a perspective view showing an arrangement near the rotary drum.

Fig. 7 is a diagram showing how a writing head travels on a magnetic tape.

Figs. 8 is a diagram showing an arrangement of magnetic heads on a rotary drum in a conventional magnetic storage apparatus.

Figs. 9-12 are diagrams explaining writing and reading to and from each head in the conventional magnetic storage apparatus.

DESCRIPTION OF THE PREFERRED EMBODIMENTS

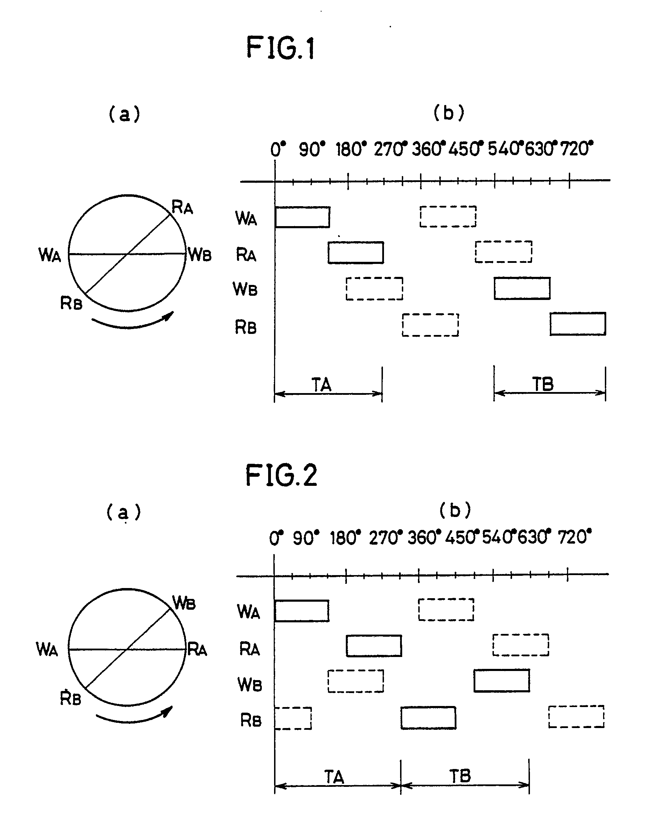

Fig. 1 shows a relationship between locations of recording and reading heads of a rotary drum of a magnetic storage apparatus according to the present invention and time period required from recording to reading by each head in that case. Fig. 1(a) shows the location of four heads on a periphery and Fig. 1(b) shows a time period wherein each head contacts the tape, with respect to a rotation angle of the rotary drum.

Referring to Fig. 1(a), a pair of recording heads WA and WB are positioned symmetrical to the center of the drum on a circumference in the rotary drum of the magnetic storage apparatus to which the present invention is applied. A second reading head RB for reading the data of a second recording head is arranged at a position about $45°$ from the recording head WA in a rotational direction of the rotary drum and a first reading head RA for reading the first data is arranged symmetrical to that portion with respect to the center of the rotary drum. The embodiment of Fig. 1 shows a case where the tape is wound around the rotary drum at an angle of $135°$. Referring to Fig. 1(b), assuming that the tape is wound to the position $135°$ from the position of the first recording head WA in the drum rotational direction, time period where each head contacts the tape will be as shown in Fig. 1(b), represented by a rotation angle of the drum. In the drawing, the portions indicated by the solid lines are time periods where the respective heads are operated and those indicated by the dotted lines are time periods where the respective heads simply contact the tape. Referring to Fig. 1(b), after the first recording head WA rotates by $135°$, the first reading head RA comes in contact with the tape. Accordingly, only the time period where the rotary drum rotates by $270°$ (corresponding to the portion indicated by TA in Fig. 1) is required for storing to reading the first data. It is also the case with the data processed by the second recording head RB and reading head RB. Comparing this result with the case of the conventional head arrangement shown in Fig. 12, when assuming that the rotation speeds of the drum are the same, the time required from recording to reading can be made about 40% less than that of the conventional head arrangement.

Fig. 2 is a diagram showing a second embodiment of the present invention. The contents shown in the drawing are the same as those of Fig. 1. Fig. 2 is different from Fig. 1 only in that Fig. 2(a) and Fig.1(a) differ in a location of each head on the rotary drum.

More specifically, in the second embodiment of the present invention, the first reading head RA is arranged at a symmetrical point to the first recording head WA with respect to the center of the drum. In addition, the second reading head RB is positioned about $45°$ from the first recording head WA in a rotational direction of the rotary drum and the second recording head WB is positioned at a symmetrical point to that position with respect to the center of the drum.

With such arrangement, a relationship between a time period where each head contacts the tape and a rotation angle of the rotary drum will be represented by Fig. 2(b). Referring to the drawing, a time period required from the recording to the reading of the first data by the first recording head WA and the first reading head RA will be a time period indicated by TA in the drawing. It is also the case with a time period required for processing the second data by the second recording head WB and the second reading head RB.

As shown in Fig. 2(b), in this case a time period required for one data processing is that required for the rotary drum to be rotated about $315°$. Comparing this time period with that in the conventional example shown in Fig. 12(b), the required time period is about 30% less than the latter.

Descriptions other than that of the location of the various heads on the rotary drum are also the same as the contents described in the background of the invention and therefore, they are not repeated herein.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A magnetic storage apparatus including a rotary drum having a pair of recording heads and a pair of reading heads on a periphery thereof and being rotated in a predetermined direction to cause said pair of reading heads to read data recorded by said pair of recording heads,
a magnetic tape for storing and reading said data being wound on the periphery of said rotary drum at an angle of more than 90°,
said pair of recording heads and reading heads including first and second recording heads and reading heads, respectively, each arranged symmetrical with respect to the center of said drum,
the data recorded by said first and second recording heads being read by said first and second reading heads, respectively,
said first and second recording heads and said first and second reading heads, when said rotary drum is rotated in said predetermined direction, coming into contact with said tape in the order of said first recording head, said first reading head or said second recording head, said second recording head or said first reading head, and said second reading head.

2. The magnetic storage apparatus according to claim 1, wherein said apparatus comprises rotary head system digital audio tape recorder.

3. The magnetic storage apparatus according to claim 1, wherein said magnetic storage apparatus is a subsidiary storage apparatus of a computer.

4. The magnetic storage apparatus according to claim 3, wherein a diameter of said rotary head is 30mm or less.

# FIG.1

(a)　　　　　　　　　　　(b)

0°  90°  180°  270°  360°  450°  540° 630° 720°

| | WA | RA | WB | RB |

TA　　　　　TB

# FIG.2

(a)　　　　　　　　　　　(b)

0°  90°  180°  270°  360°  450° 540° 630°  720°

| | WA | RA | WB | RB |

TA　　　TB

7

## FIG.3

EP 0 415 454 A2

## FIG.4

| | a | b | c | d | e | Pa | Pb | Pc | Pd | Pe |
|---|---|---|---|---|---|---|---|---|---|---|
| | DATA | DATA | DATA | DATA | DATA | PARITY | PARITY | PARITY | PARITY | PARITY |

1 FRAME

# FIG.5

|  | M0 | M1 | M2 | M3 | M4 | M5 | M6 | M7 |
|---|---|---|---|---|---|---|---|---|
| (a) | N+7 | N+6 | N+5 | N+4 | N+3 | N+2 | N+1 | N |

| (b) | N+8 | N+7 | N+6 | N+5 | N+4 | N+3 | N+2 | N+1 |
|---|---|---|---|---|---|---|---|---|

| (c) | N+9 | N+8 | N+7 | N+6 | N+5 | N+4 | N+3 | N+2 |
|---|---|---|---|---|---|---|---|---|

| (d) | N+10 | N+9 | N+8 | N+7 | N+6 | N+5 | N+4 | N+3 |
|---|---|---|---|---|---|---|---|---|

## FIG.6

## FIG.7

## FIG.8

WA

RA

$\theta_3$ $\theta_1$

$\theta_2$

90

RB

WB

## FIG.9

1 ROTATION OF DRUM

WRITING

| WA | WB | WA |

READING

| RB | RA | RB |

## FIG.10

1 ROTATION OF DRUM | 1 ROTATION OF DRUM

WRITING

$\alpha$ $\alpha$

| WA | WB | WA | WB |

READING

$\alpha$ $\alpha$

| RA | RB |

$\theta_1$ $\theta_2$ $\theta_3$

EP 0 415 454 A2

# FIG.11

An-2 Bn-2 An-1 Bn-1 An   Bn

RECORDING ⟶

P'   P

# FIG.12

( a )                                        ( b )

0° 90° 180° 270° 360° 450° 540° 630° 720°

WA

RA

WB

RB

TA

TB